# EUROPÄISCHE PATENTSCHRIFT

(11) **EP 3 165 334 B1**
(45) Veröffentlichungstag und Bekanntmachung des Hinweises auf die Patenterteilung: **12.12.2018**
(21) Anmeldenummer: 16187729.5
(22) Anmeldetag: 08.09.2016
(51) Int. Cl.: B25F 5/00, B25B 21/00

(54) **VERFAHREN ZUM PARAMETRIEREN EINES MONTAGEWERKZEUGES, MONTAGEWERKZEUG UND LESBARER CODE**
METHOD FOR PARAMETERIZATION OF AN INSTALLATION TOOL, INSTALLATION TOOL AND READABLE CODE
PROCÉDÉ DE PARAMÉTRAGE D'UN OUTIL DE MONTAGE, OUTIL DE MONTAGE ET CODE LISIBLE

(30) Priorität: 28.10.2015 DE 102015221033
(43) Veröffentlichungstag der Anmeldung: 10.05.2017
(73) Patentinhaber: ROBERT BOSCH GMBH, 70442 Stuttgart (DE)
(72) Erfinder: Henzler, Guenther, 70567 Stuttgart (DE)
(74) Vertreter: Thürer, Andreas

(56) Entgegenhaltungen:
- EP-A2- 1 188 521
- EP-A2- 2 078 590
- DE-A1-102014 209 009
- GB-A- 2 511 591
- US-A1- 2012 007 748
- US-A1- 2012 167 721
- US-A1- 2012 168 188
- US-A1- 2012 234 569

## Beschreibung

Die vorliegende Erfindung betrifft ein Verfahren zum Parametrieren eines Montagewerkzeuges mit einem Parametersatz, ein Montagewerkzeug sowie ein lesbaren Code.

### Stand der Technik

Bei industriellen Montagearbeiten kommen üblicherweise Montagewerkzeuge zum Einsatz, die einfach und flexibel handhabbar sind. Dazu können solche Montagewerkzeuge von einem Benutzer aufgenommen, benutzt und wieder zurückgelegt werden. Solche Montagewerkzeuge sind bspw. Schrauber, Nietgeräte, Stanzgeräte und dergleichen, wie sie bei entsprechenden Montagearbeiten benötigt werden.

Für die Prozesssicherheit können dabei im Montagewerkzeuge integrierte Steuerungen und Sensoriken vorgesehen sein, durch die der abzuarbeitende Prozess, bspw. das Festdrehen einer Schraube, überwacht oder sogar selbsttätig durchgeführt wird. Dabei kann bspw. ein spezielles Drehmoment vorgegeben werden. Hierfür kann eine auf den jeweiligen Prozess abgestimmte Programmierung des Montagewerkzeuges nötig sein.

Aus der DE 10 2010 044 823 A1 ist bspw. ein Schrauber bekannt, bei dem ein Benutzer über eine Eingabeeinheit eine Verbindung zu einer übergeordneten Schraubprozesssteuerung herstellen kann, von welcher auf den Schrauber eine Programmierung für einen abzuarbeitenden Prozess erhält.

Aus der EP 1 188 521 A2, der US 2012/168188 A1, der DE 10 2014 209 009 A1 sowie der US 2012/167721 A1 sind jeweils Montagegeräte wie Schrauber bekannt, die für einen bestimmten Prozessschritt mittels einlesen eines Codes parametriert werden können.

### Offenbarung der Erfindung

Erfindungsgemäß werden ein Verfahren, ein Montagewerkzeug und eine Komponente oder ein Dokument mit den Merkmalen der unabhängigen Patentansprüche vorgeschlagen. Vorteilhafte Ausgestaltungen sind Gegenstand der Unteransprüche sowie der nachfolgenden Beschreibung.

Ein erfindungsgemäßes Verfahren dient zum Parametrieren eines Montagewerkzeuges mit einem Parametersatz, der zur Abarbeitung eines Prozesses mit dem Montagewerkzeug dient. Hierzu ist der Parametersatz in einem lesbaren Code hinterlegt, mittels einer Einlese-Schnittstelle des Montagewerkzeuges wird der lesbare Code eingelesen, und das Montagewerkzeug wird mit dem aus dem lesbaren Code eingelesenen Parametersatz parametriert.

Auf diese Weise kann sehr schnell und einfach eine Parametrierung eines Montagewerkzeuges durchgeführt werden. Insbesondere ist ein solcher lesbarer Code bspw. an geeigneten Stellen in einem Montageablauf platzierbar, so dass dieser Code wenn nötig mittels des Montagewerkzeuges ausgelesen werden kann und das Montagewerkzeug auf diese Weise sofort die für einen aktuellen, abzuarbeitenden Prozess nötigen Prozessschritte kennt. Eine manuelle Eingabe oder Aktivierung eines Prozesses durch einen Benutzer ist somit nichtmehr erforderlich. Vielmehr kann die entsprechende Programmierung direkt in dem Montagewerkzeug allein durch das Auslesen eines Codes erfolgen und das Montagewerkzeug kann im Rahmen der Industrie 4.0, d.h. der Automatisierung der Industrie, verwendet werden. Auch ist keine Verbindung zu einer übergeordneten Prozesssteuerung mehr nötig.

Vorzugsweise liegt der lesbare Code als eindimensionaler Code oder als zweidimensionaler Code, insbesondere als Matrix-Code, vor. Hierbei handelt es sich um besonders einfach darzustellende und einfach an einem Untergrund anzubringende Codes. Insbesondere in einem Matrix-Code, bspw. einem QR-Code, kann eine große Menge an Informationen hinterlegt sein.

Zweckmäßigerweise ist der lesbare Code auf einer Komponente oder einem Dokument, die bzw. das mit dem Montagewerkzeug und/oder dem mittels des Montagewerkzeuges durchzuführenden Prozess korreliert ist, insbesondere einem Bauteil, einem Werkstückträger, einer technischen Unterlage, einer Zeichnung oder einem Datenblatt, aufgebracht. Dies ermöglicht eine besonders schnelle Parametrierung des Montagewerkzeuges. Wenn bspw. der lesbare Code auf einem Werkstückträger, auf dem ein spezielles Werkstück angeordnet ist, welches bestimmte Prozessschritte zur Montage erfordert, angebracht ist, kann ein Bediener, sobald er mit dem Montagewerkzeug den Werkstückträger erreicht, den lesbaren Code einlesen und sofort mit dem Montagewerkzeug die nötigen Prozessschritte durchführen. Für den Fall, dass der lesbare Code in einem Datenblatt hinterlegt ist, kann ein Bediener bspw. für bestimmte Prozessvorgänge bei der Montage einer Komponente nicht nur die technischen Informationen zu der Komponente erhalten sondern zugleich auch die nötige Parametrierung des Montagewerkzeuges vornehmen.

Es wird als Montagewerkzeug ein Schrauber verwendet. Dabei umfasst der Prozess insbesondere einen Schraubprozess. Bei dem erwähnten Montagewerkzeugen bzw. Prozess handelt es sich um häufig in industriellen Anwendungen verwendete Montagewerkzeuge bzw. Prozesse, so dass hier durch das vorgeschlagene Verfahren eine besonders schnelle und effektive Montage ermöglicht wird.

Ein erfindungsgemäßes Montagewerkzeug weist eine Einlese-Schnittstelle auf und ist dazu eingerichtet, einen lesbaren Code, in dem ein Parametersatz hinterlegt ist, einzulesen und mit dem Parametersatz parametriert zu werden. Zweckmäßigerweise ist das Montagewerkzeug weiterhin dazu eingerichtet, aufgrund der durch den eingelesen Parametersatz vorgenommenen Parametrierung, den mit der Parametrierung verknüpften Prozess abzuarbeiten.

Ein erfindungsgemäßer Lesbarer Code, insbesondere ein- oder zweidimensionaler Code, weiter insbesondere Matrix-Code, weist einen darin hinterlegten Parametersatz auf. Bei einem solchen lesbaren Code handelt sich dabei bspw. um eine bildliche Bereitstellung von Information in einem Muster. Der lesbare Code ist dabei von einem Montagegerät mittels einer Einlese-Schnittstelle einlesbar, wobei der Parametersatz derart ausgebildet ist, dass das Montagegerät damit parametrierbar ist, um einen Prozess abzuarbeiten. Die Einlese-Schnittstelle kann beispielsweise eine Kamera oder einen Scanner umfassen, z.B. auf Basis eines CCD- oder CMOS-Sensors.

Vorzugsweise ist der lesbare Code auf einer Komponente oder einem Dokument, die bzw. das mit dem Montagewerkzeug und/oder dem mittels des Montagewerkzeuges durchzuführenden Prozess korreliert ist, insbesondere einem Bauteil, einem Werkstückträger, einer technischen Unterlage, einer Zeichnung oder einem Datenblatt angebracht.

Bzgl. der Vorteile und weitere vorteilhafter Ausgestaltungen des erfindungsgemäßen Montagewerkzeuges und des erfindungsgemäßen lesbaren Codes sei zur Vermeidung von Wiederholungen auf die obigen Ausführungen zum erfindungsgemäßen Verfahren verwiesen.

Eine erfindungsgemäße Anordnung weist ein erfindungsgemäßes Montagewerkzeug und einen erfindungsgemäßen lesbaren Code auf und ist insbesondere dazu eingerichtet, ein erfindungsgemäßes Verfahren durchzuführen.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

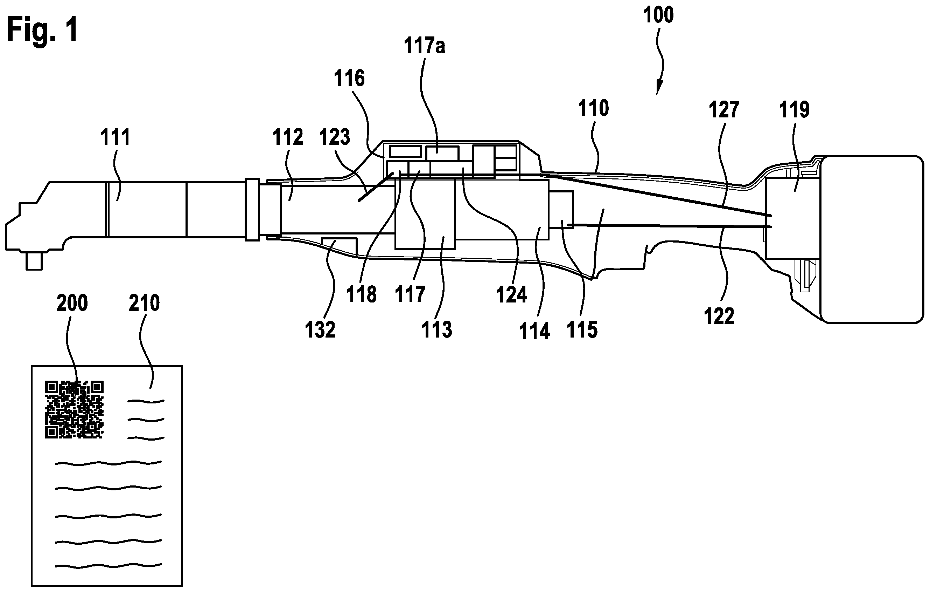

- Figur 1: zeigt schematisch ein erfindungsgemäßes Montagewerkzeug und einen erfindungsgemäßen lesbaren Code, jeweils in einer bevorzugten Ausgestaltung.

### Detaillierte Beschreibung der Zeichnung

In Figur 1 ist ein Montagewerkzeug 100, hier beispielhaft in Form eines Schraubers, dargestellt, das zur Durchführung von Schraubaufgaben dient und ein Gehäuse 110 umfasst. Das Gehäuse 110 wiederum umfasst einen Abtrieb 111, ein Getriebe 113 und einen Motor 114 und vorzugsweise noch einen Drehmomentaufnehmer 112 und einen Rotorlagegeber 115.

Der Abtrieb 111 ist mittels des Motors 114 und unter Verwendung des Getriebes 113 antreibbar. Von dem Gehäuse 110 des Schraubers 100 ist ein integriertes Schraubprozesssteuermittel 116 zur Durchführung eines in sich vollständig abgeschlossenen Prozesses umfasst. Der Schrauber 100 ist zumindest zeitweise autark und mittels des internen Steuermittels 116 unabhängig von einer übergeordneten Schraubprozesssteuerung betreibbar.

Das Schraubprozesssteuermittel 116 umfasst als Komponenten mindestens einen Mikroprozessor 117 mit Speicher 117a und vorzugsweise zusätzlich ein Messmodul 118 und einen Servoverstärker 119.

Der Eingang des Messmoduls 118 ist mit dem Ausgang des Drehmomentaufnehmers 112 mittels einer Verbindung 123 datenübertragend verbunden. Die Verbindung 123 ist dabei bspw. ein Datenbus oder auch eine entsprechende serielle Datenverbindung denkbar. Der Servoverstärker 119 ist mit dem Rotorlagegeber 115 mittels einer Verbindung 122 (bspw. ebenfalls in Form eines Datenbusses oder einer seriellen Datenverbindung) und mit dem Messmodul 118 mittels einer weiteren, separaten Verbindung 127 verbunden. Die Verbindung 127 ist ein Datenbus, welcher eine Querkommunikation zwischen den Komponenten 117, 118, 119, 120 ermöglicht.

Der Motor 114 kann unter Berücksichtigung der Rotorlage und der Ausgangsdaten des Drehmomentaufnehmers 112 mittels eines vom Mikroprozessor 117 ausführbaren Schraubprogramms gesteuert werden. Der Mikroprozessor 117 liest das Schraubprogramm bzw. die nötigen Prozessschritte bspw. aus dem Speicher 117a aus.

Nahe am Abtrieb 111 ist eine Lese-Schnittstelle 132 angeordnet, die dazu eingerichtet ist, einen lesbaren Code 200, bspw. einen Matrix-Code einzulesen. Der lesbare Code 200 ist hier beispielhaft auf einem als Datenblatt ausgebildetem Dokument 210 aufgebracht.

Zur Parametrierung des Schraubers 100 wird nun der lesbare Code 200 mittels der Einlese-Schnittstelle 132 des Schraubers 100 eingelesen. In dem lesbaren Code 200 ist dabei ein Parametersatz hinterlegt, womit der Schrauber 100 nach dem Einlesen parametriert bzw. programmiert wird. Die entsprechenden Prozessschritte können dann, wie oben erwähnt, bspw. im Speicher 117a abgelegt sein. Dieser Vorgang kann bspw. automatisch erfolgen.

Ein Bediener kann nun mit dem Schrauber 100 einen Prozess, zu dem er den lesbaren Code 200 eingelesen hat, abarbeiten. Ein solcher Prozess umfasst erfindungsgemäß verschiedene Prozessschritte in Form von mehreren, festzuziehenden Schrauben. Dabei kann bspw. für eine vorgegebene Reihenfolge, in welcher die Schrauben festzuziehen sind, eine zugehörige Reihenfolge an durch den Schrauber 100 bereitzustellenden Drehmomenten für den jeweiligen Schraubvorgang, vorgesehen sein.

Weiterhin steht ein Farbdisplay 124 zur Verfügung. Auf diesem können bspw. verschiedene Informationen, insbesondere über den aktuellen, abzuarbeiten Prozess für den Bediener angezeigt werden.

## Patentansprüche

1. Verfahren zum Parametrieren eines als Schrauber ausgebildeten Montagewerkzeuges (100) mit einem Parametersatz, der zur Abarbeitung eines Prozesses mit dem Montagewerkzeug (100) dient, welcher Parametersatz mehrere Prozessschritte in Form von mehreren, festzuziehenden Schrauben umfasst, wobei der Parametersatz in einem lesbaren Code (200) hinterlegt ist, wobei mittels einer Einlese-Schnittstelle (132) des Montagewerkzeuges (100) der lesbare Code (200) eingelesen wird, und wobei das Montagewerkzeug (100) mit den aus dem lesbaren Code (200) eingelesenen Parametersatz parametriert wird.

2. Verfahren nach Anspruch 1, wobei der lesbare Code (200) als eindimensionaler Code oder als zweidimensionaler Code, insbesondere als Matrix-Code, vorliegt.

3. Verfahren nach Anspruch 1 oder 2, wobei der lesbare Code (200) auf einer Komponente oder einem Dokument (210), die bzw. das mit dem Montagewerkzeug (200) und/oder dem mittels des Montagewerkzeuges (100) durchzuführenden Prozess korreliert ist, insbesondere einem Bauteil, einem Werkstückträger, einer technischen Unterlage, einer Zeichnung oder einem Datenblatt, aufgebracht ist.

4. Montagewerkzeug (100), das als Schrauber ausgebildet ist, mit einer Einlese-Schnittstelle (132), das dazu eingerichtet ist, einen lesbaren Code (200), in dem ein Parametersatz hinterlegt ist, einzulesen und mit dem Parametersatz parametriert zu werden, welcher Parametersatz mehrere Prozessschritte in Form von mehreren, festzuziehenden Schrauben umfasst, und das weiterhin dazu eingerichtet ist, aufgrund der durch den eingelesen Parametersatz vorgenommenen Parametrierung, den mit der Parametrierung verknüpften Prozess abzuarbeiten.

5. Lesbarer Code (200), insbesondere ein- oder zweidimensionaler Code, weiter insbesondere Matrix-Code, in dem ein Parametersatz hinterlegt ist, welcher Parametersatz mehrere Prozessschritte in Form von mehreren, festzuziehenden Schrauben umfasst, wobei der lesbare Code (200) von einem als Schrauber ausgebildeten Montagewerkzeug (100) mittels einer Einlese-Schnittstelle (132) einlesbar ist, und wobei der Parametersatz derart ausgebildet ist, dass das Montagewerkzeug (100) damit parametrierbar ist, um einen Prozess abzuarbeiten.

6. Lesbarer Code (200) nach Anspruch 5, wobei der lesbare Code (200) auf einer Komponente oder einem Dokument (210), die bzw. das mit dem Montagewerkzeug (100) und/oder dem mittels des Montagewerkzeuges (100) durchzuführenden Prozess korreliert ist, insbesondere einem Bauteil, einem Werkstückträger, einer technischen Unterlage, einer Zeichnung oder einem Datenblatt angebracht ist.

7. Anordnung mit einem Montagewerkzeug (100) nach Anspruch 4 und einem lesbaren Code (200) nach Anspruch 5 oder 6, die dazu eingerichtet ist, ein Verfahren nach einem der Ansprüche 1 bis 3 durchzuführen.

## Claims

1. Method for parameterization of an installation tool (100) formed as a screwdriver with a parameter set which is used to execute a process with the installation tool (100), which parameter set comprises multiple process steps in the form of multiple screws to be tightened, wherein the parameter set is stored in a readable code (200), wherein the readable code (200) is read in by means of a read interface (132) of the installation tool (100), and wherein the installation tool (100) is parameterized with the parameter set read in from the readable code (200) .

2. Method according to Claim 1, wherein the readable code (200) is present as a one-dimensional code or as a two-dimensional code, in particular as a matrix code.

3. Method according to Claim 1 or 2, wherein the readable code (200) is applied to a component or a document (210) which correlates with the installation tool (200) and/or with the process to be carried out with the installation tool (100), in particular a component, a workpiece carrier, a technical document, a drawing or a data sheet.

4. Installation tool (100), which is formed as a screwdriver, having a read interface (132) which is configured to read in a readable code (200) in which a parameter set is stored and to be parameterized with the parameter set, which parameter set comprises multiple process steps in the form of multiple screws to be tightened, and which is also configured to execute the process linked with the parameterization on the basis of the parameterization performed by the parameter set read in.

5. Readable code (200), in particular a one-dimensional or two-dimensional code, further in particular a matrix code, in which a parameter set is stored, which parameter set comprises multiple process steps in the form of multiple screws to be tightened, wherein the readable code (200) can be read in by an installation tool (100) formed as a screwdriver by means of a read interface (132), and wherein the parameter set is formed in such a way that the installation tool (100) can be parameterized therewith in order to execute a process.

6. Readable code (200) according to Claim 5, wherein the readable code (200) is applied to a component or a document (210) which correlates with the installation tool (100) and/or with the process to be carried out with the installation tool (100), in particular a component, a workpiece carrier, a technical document, a drawing or a data sheet.

7. Arrangement comprising a installation tool (100) according to Claim 4 and a readable code (200) according to Claim 5 or 6, which is configured to carry out a method according to one of Claims 1 to 3.

## Revendications

1. Procédé de paramétrage d'un outil de montage (100) réalisé sous la forme d'un tournevis avec un jeu de paramètres qui sert à exécuter un processus au moyen de l'outil de montage (100), lequel jeu de paramètres comprend plusieurs étapes de processus sous la forme de plusieurs vis à serrer, dans lequel le jeu de paramètres est mémorisé dans un code lisible (200), dans lequel le code lisible (200) est lu au moyen d'une interface de lecture (132) de l'outil de montage (100) et dans lequel l'outil de montage (100) est paramétré suivant le jeu de paramètres lu à partir du code lisible (200).

2. Procédé selon la revendication 1, dans lequel le code lisible (200) est présent sous la forme d'un code unidimensionnel ou bidimensionnel, en particulier d'un code matriciel.

3. Procédé selon la revendication 1 ou 2, dans lequel le code lisible (200) est appliqué sur un composant ou un document (210) qui est corrélé avec l'outil de montage (200) et/ou le processus devant être exécuté au moyen de l'outil de montage (100), notamment un composant, un support de pièce, une documentation technique, un schéma ou une fiche de données.

4. Outil de montage (100) sous la forme d'un tournevis, comportant une interface de lecture (132), qui est conçu pour lire un code lisible (200) dans lequel est mémorisé un jeu de paramètres et pour être paramétré avec ledit jeu de paramètres, lequel jeu de paramètres comprend plusieurs étapes de processus sous la forme de plusieurs vis à serrer, et qui est en outre conçu pour exécuter le processus lié au paramétrage sur la base du paramétrage effectué au moyen du jeu de paramètres lu.

5. Code lisible (200), notamment code unidimensionnel ou bidimensionnel, notamment code matriciel, dans lequel est mémorisé un jeu de paramètres, lequel jeu de paramètres comprend plusieurs étapes de processus sous la forme de plusieurs vis à serrer, dans lequel le code lisible (200) peut être lu par un outil de montage (100) réalisé sous la forme d'un tournevis au moyen d'une interface de lecture (132), et dans lequel le jeu de paramètres est configuré de manière à ce que l'outil de montage (100) puisse être paramétré avec celui-ci pour exécuter un processus.

6. Code lisible (200) selon la revendication 5, dans lequel le code lisible (200) est appliqué sur un composant ou un document (210) qui est corrélé avec l'outil de montage (100) et/ou le processus devant être exécuté au moyen de l'outil de montage (100), notamment un composant, un support de pièce, une documentation technique, un schéma ou une fiche de données.

7. Système comportant un outil de montage (100) selon la revendication 4 et un code lisible (200) selon la revendication 5 ou 6, qui est conçu pour la mise en oeuvre d'un procédé selon l'une des revendications 1 à 3.
